**Europäisches Patentamt**

(19) **European Patent Office**

**Office européen des brevets**

(11) Veröffentlichungsnummer: **0 093 183**
**B1**

(12) **EUROPÄISCHE PATENTSCHRIFT**

(45) Veröffentlichungstag der Patentschrift:
08.10.86

(51) Int. Cl.⁴: **G 01 G 23/01**

(21) Anmeldenummer: **82103718.1**

(22) Anmeldetag: **30.04.82**

(54) **Waage.**

(43) Veröffentlichungstag der Anmeldung:
**09.11.83 Patentblatt 83/45**

(45) Bekanntmachung des Hinweises auf die Patenterteilung:
**08.10.86 Patentblatt 86/41**

(84) Benannte Vertragsstaaten:
**DE IT**

(56) Entgegenhaltungen:
**DE - A - 2 601 165**
**DE - A - 2 609 560**
**DE - A - 2 942 300**
**DE - A - 3 115 458**
**DE - B - 2 601 151**
**FR - A - 2 468 892**
**US - A - 3 656 337**

(73) Patentinhaber: **August Sauter GmbH, Gartenstrasse 86, D-7470 Albstadt 1-Ebingen (DE)**

(72) Erfinder: **Kammerer, Manfred, Wilhelm-Keller-Strasse 44, D-7470 Albstadt 1-Ebingen (DE)**
Erfinder: **Wallisch, Gebhard, Albstrasse 51, D-7453 Burladingen 1 (DE)**
Erfinder: **Beikircher, Kurt, Nr. 93, I-39 059 Oberbozen (IT)**

(74) Vertreter: **Patentanwälte Leinweber & Zimmermann, Rosental 7/II Aufg., D-8000 München 2 (DE)**

ACTORUM AG

## Beschreibung

Die Erfindung betrifft eine Waage zum Bestimmen einer Masse, deren sich unter Einfluss der Erdbeschleunigung ergebender Gewichtswert durch ein lastaufnehmendes Messsystem bestimmt wird, wobei die Waage mit einer Kalibriereinrichtung versehen ist, die mit einer Referenzmasse eine Nachkalibrierung auf den Ortswert der Erdbeschleunigung ermöglicht, und wobei der Quotient des Sollwertes und des Istwertes des Gewichtes der Referenzmasse als Nachkalibrier-Korrekturgrösse in den Auswertrechner der Waage eingespeist wird.

Bei einer bekannten Waage dieser Art (DE-B-2 601 151) ist der Waage mit Waagschale in bekannter Weise ein Analog-Digital-Wandler nachgeschaltet, zwischen den und eine üblicherweise verwendete Anzeigeeinrichtung ein Kleinrechner geschaltet ist, dem ein Speicher zugeordnet wird. Bei dem Speicher handelt es sich vorzugsweise um einen solchen, der auch nach Abschaltung der Versorgungsspannung den jeweiligen Speicherinhalt unverlierbar festhält. Um mit geringem Schaltungsaufwand Fehlergrössen auszuschliessen, wie beispielsweise die am Aufstellungsort wirksame Erdbeschleunigung, die von derjenigen am Herstellungsort abweicht, Umgebungseinflüsse, wie Temperatur- oder Feuchtigkeitsänderungen, Alterungen der Bauelemente und dergleichen, wird in das Anzeigeergebnis ein Korrekturfaktor eingerechnet. Hierfür wird eine Nachkalibrierung durchgeführt, für die auf die Waagschale eine Referenzmasse aufgelegt wird, deren Gewicht vorzugsweise der Höchstlast der Waage entspricht. Das Gewicht dieser Referenzmasse ist bekannt und bildet den Sollwert. Es wird nun der Istwert festgestellt und sodann vom Kleinrechner der Quotient aus Sollwert und Istwert gebildet und im Speicher unverlierbar abgespeichert. Dieser Quotient wird als Korrekturfaktor in die Anzeige mit eingerechnet, die somit unabhängig vom Aufstellungsort und den Umgebungseinflüssen den jeweils richtigen Wert des zu wägenden Gewichtes anzeigt.

Bekannt ist es auch schon (DE-A-2 601 165), die Referenzmasse nicht auf die Waagschale aufzulegen, sondern in das Gerät einzubauen und dieses mit einem Hubmechanismus zu versehen, mit dessen Hilfe die Referenzmasse vom Geräteäusseren her für das Durchführen eines Nachkalibrierzyklus aufgelegt bzw. wieder abgehoben werden kann. Nachteilig ist hierbei, dass die Bedienungsperson selbst den Nachkalibrierzyklus auslösen muss und damit Gelegenheit erhält, durch gleichzeitige Massnahmen, beispielsweise durch Belastung oder Entlastung der Waagschale das Ergebnis des Nachkalibrierzyklus und damit die künftige Anzeige der Waage zu beeinflussen, gegebenenfalls zu verfälschen. Da der im Nachkalibrierzyklus ermittelte Korrekturfaktor abgespeichert wird und auch in die künftigen Anzeigen und Preisberechnungen mit eingeht, ist das erheblich nachteilig unabhängig davon, ob von der Bedienungsperson absichtlich manipuliert oder durch Fehlbedienung unabsichtlich die Abspeicherung einer falschen Korrekturgrösse veranlasst wird.

Es ist auch schon bekannt (DE-A-2 609 560), eine im Inneren der Waage vorgesehene Referenzmasse, die vorzugsweise ein Kalibriergewicht ist, mit einer Auflageeinrichtung zu versehen, die zwar von Hand vom Waagenäusseren her betätigt wird, aber nach Loslassen des Betätigungshebels selbsttätig in die Ausgangslage zurückkehrt. Das stellt eine Bedienungsvereinfachung dar. Auch hier kann aber in den mit Hilfe des Kalibriergewichtes durchgeführten Nachkalibrierzyklus absichtlich oder aus Unachtsamkeit verfälschend eingegriffen werden.

Zum Ausschluss von Anzeigeverfälschungen durch Temperaturdrift, Alterungsdrift und Erdbeschleunigung ist es auch schon bekannt (DE-A-2 942 300), eine Waage mit selbsttätiger Nachkalibrierung zu versehen. Hierfür wird bei jedem Wägevorgang zunächst in einem ersten Schritt der Nullpunktfehler bestimmt und abgespeichert, in einem zweiten Schritt die Referenzmasse aufgelegt und von der sich aufgrund der Referenzmasse ergebenden Anzeigespannung die dem Nullpunktfehler entsprechende Anzeigespannung abgezogen, worauf in einem dritten Schritt das Wägegut auf der Waagschale abgelegt und auch von diesem Spannungswert die dem Nullpunktfehler entsprechende Spannung abgezogen wird. Erst dann wird aus den abgespeicherten Spannungsdifferenzen, die sich am Ende des zweiten und des dritten Schrittes ergeben, im Dual-Slope-Verfahren der Quotient gebildet. Dieses Verfahren bei jedem einzelnen Wägevorgang selbsttätig durchzuführen, stellt einen gewissen Aufwand dar, der sich auch bezüglich des Bauelementebedarfs niederschlägt.

Nachteilig an allen diesen bekannten Waagen ist, dass sie noch der Manipulation zugänglich sind und auch unabsichtliche Fehlbedienung (z.B. bereits während des Nachkalibrierzyklus auf der Waagschale liegendes Wägegut) nicht erkennen und berücksichtigen. Schon gar nicht sind diese möglichen Fehlerquellen ausgeschlossen.

Aufgabe der Erfindung ist es, eine einfach aufgebaute, am Aufstellungsort selbst kalibrierende kraftmessende Waage vorzuschlagen, bei der nicht nur die Einflüsse der sich ändernden Erdbeschleunigung, der Temperatur, einer Schrägstellung etc. Nachkalibrierung eliminiert sind, sondern auch absichtliche Manipulationen bzw. durch Unachtsamkeit bedingte Bedienungsfehler bei der Nachkalibrierung zumindest weitgehend ausgeschaltet sind.

Diese Aufgabe wird erfindungsgemäss dadurch gelöst, dass das Ergebnis des Nachkalibrierzyklus einer Plausibilitätsprüfung unterzogen und die Waage nur bei positivem Ergebnis der Plausibilitätsprüfungen für Wägungen freigegeben wird. Durch eine solche Plausibilitätsprüfung wird zuverlässig jedes Fehlverhalten bei der Nachkalibrierung, aber auch jede Manipulation erkennbar. Die Waage wird dann nicht zur Wägung freigegeben. Vielmehr wird die Bedienungsperson auf ihre Unachtsamkeit aufmerksam gemacht oder genötigt, von einer beabsichtigten Manipulation Abstand zu nehmen. Das stellt eine erhebliche zusätzliche Absicherung und damit Verbesserung dar.

Eine besonders einfache Plausibilitätsprüfung besteht darin, der Selbstkalibriereinrichtung Grenzwerte für die zulässige Maximalabweichung des Ortswertes der Erdbeschleunigung von ihrer Grösse bei der Erstkalibrierung vorzugeben. Liegt der sich aufgrund des Nachkalibrierzyklus ergebende Korrekturwert ausserhalb dieser Grenzwerte, ist also die zu korrigierende Abweichung grösser als theoretisch überhaupt möglich, so wird hieraus die Fehlbedienung oder Manipulation wieder erkennbar, und das Wägen mit einer derart fehlkalibrierten Waage unterbunden.

Eine weitere einfache Möglichkeit der Plausibilitätsprüfung besteht darin, mehrere Nachkalibrierzyklen hintereinander durchzuführen und deren Ergebnisse auf Gleichheit zu überprüfen. Die Waage wird nur bei Gleichheit freigegeben. Da die Bedienungsperson die Anzahl der durchgeführten Nachkalibrierzyklen nicht erkennen und nur schwer für gleiche Bedingungen bei sämtlichen Nachkalibrierzyklen sorgen kann, wird durch eine solche Plausibilitätsprüfung die Manipulation zusätzlich erschwert.

Besonders günstig ist es, wenn Nachkalibrierzyklus und Plausibilitätsprüfung bei jedem Einschalten der Waage selbsttätig durchgeführt werden. Das selbsttätige Arbeiten verhindert den Zugriff vom Waagenäusseren her und erbringt so eine weitere Absicherung gegen Manipulationen und Fehlbedienungen. Dennoch ist diese Methode günstiger, als das Durchführen eines Nachkalibrierzyklus in jedem einzelnen Wägevorgang.

Zur Absicherung der richtigen Kalibrierung ist es stattdessen oder zusätzlich auch möglich, den Kalibriervorgang in Zeitabständen selbsttätig zu wiederholen. Eine solche selbsttätige Wiederholung stellt damit eine Selbstüberprüfung der Waage unabhängig von der Bedienungsperson dar. Werden die Zeitintervalle zwischen den selbsttätig wiederholten Nachkalibrierzyklen durch eine Zufallssteuerung oder dergleichen unregelmässig ausgeschaltet, so wird die Manipulation durch die Bedienungsperson noch weiter erschwert.

Auflegen und Abheben der Referenzmasse erfolgt elektromechanisch und ist bei diesem Vorgang in der Regel mit Geräusch verbunden. Die Geräuschentwicklung könnte die Bedienungsperson erkennen lassen, wann ein Nachkalibrierzyklus durchgeführt wird. Eine weitere, die Plausibilitätsprüfung absichernde Massnahme besteht darin, in die Waage einen Geräuscherzeuger einzubauen, der die Antriebsgeräusche für den Nachkalibrierzyklus akustisch überdeckt.

Eine weitere Möglichkeit zur Absicherung der Waage gegen Manipulationen besteht in der Verwendung mehrerer Referenzmassen mit je zugehöriger Auflagemechanik. Es werden dann die Referenzmassen einzelnen und/oder gemeinsam aufgelegt und die dabei festgestellten Lastwerte durch den Rechner dahin überprüft, in welchem Verhältnis ihre Auswirkungen zueinander stehen. Der Aufwand ist mechanisch und elektronisch für diese Lösung höher, jede Manipulation ist aber zusätzlich erheblich erschwert.

Selbstverständlich ist es auch günstig und möglich, den selbsttätigen Nachkalibrierzyklus so auszugestalten, dass er auch bei auf der Lastaufnahme aufliegender Masse durchgeführt werden kann, also dann, wenn bereits mit der Waage gearbeitet wird. Hierfür wird zweckmässig in den Nachkalibrierzyklus eine Differenzwertbildung eingebaut, mit deren Hilfe unter dem Einfluss der auf der Lastaufnahme liegenden Masse einmal das Ergebnis mit aufgelegter Referenzmasse, einmal ohne aufgelegte Referenzmasse ermittelt und sodann durch die Differenzwertbildung der Einfluss der auf der Lastaufnahme befindlichen Masse eliminiert wird.

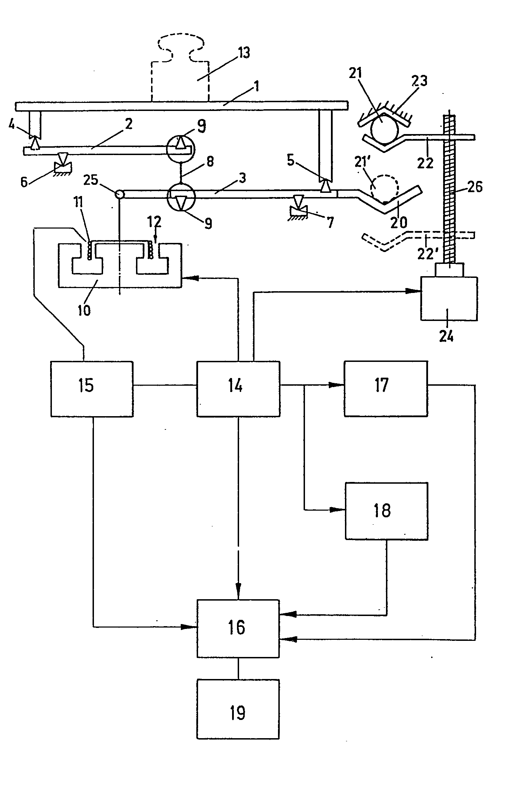

Die einzige Figur zeigt eine selbstkalibrierende Waage, teils in schematischer Andeutung ihrer Mechanik, teils in einem Blockschaltbild ihrer Elektronik.

Eine Lastaufnahme 1 stützt sich auf Übertragungshebeln 2, 3 in Gelenkpunkten 4,5 ab. Die Übertragungshebel 2, 3 sind ihrerseits in Gelenkpunkten 6, 7 gehäusefest gelagert. Weiter sind die Übertragungshebel 2, 3 mit einer Koppel 8 und Gelenken 9 kraftschlüssig miteinander verbunden.

Der Übertragungshebel 3 ist am linken Ende verlängert. An seinem Endpunkt 25 ist hier eine Lastzelle 10 angelenkt, die aus einer Kraftspule 11 besteht, die in einem Magnetfeld 12 angeordnet ist. Unter Einfluss einer auf die Lastaufnahme 1 aufgelegten Masse 13 erzeugt die Lastzelle 10 (gesteuert von einer Steuereinrichtung 14) eine nach unten gerichtete Kraft. Hierdurch wird die auf die Lastaufnahme 1 einwirkende Massenkraft (Gewicht $G = m \times g$, worin m der Massenwert der Masse 13 und g die in der nachfolgenden Beschreibung mit Gravitationskonstante bezeichnete Erdbeschleunigung ist) kompensiert und das Hebelsystem im Gleichgewicht gehalten. Der in der Kraftspule 11 fliessende Strom ist proportional dem Kraftangriff im Anlenkpunkt 25 und damit auch proportional zum Gewicht der Masse 13.

Ein Analog/Digital-Wandler 15 digitalisiert den Wert der Stromstärke des durch die Kraftspule 11 fliessenden Stromes und gibt einen entsprechenden Zahlenwert einem Auswertrechner 16 ein. Dieser ist überdies von einem Referenzspeicher 17 und einem Gravitationsspeicher 18 gespeist, die unten näher erläutert sind. Das unter Einfluss der Eingabe aus den Baugruppen 14, 15, sowie 17, 18 vom Auswertrechner 16 ermittelte Gewicht der Masse 13 auf der Lastaufnahme 1 wird in einem Anzeigegerät 19 digital in Form eines Anzeigewertes A angezeigt.

Am rechten Arm des Übertragungshebels 3 ist eine Referenzmassenaufnahme 20 vorgesehen. Diese besteht aus einer gabelförmigen Verlängerung des Übertragungshebels 3, die eine Mulde

zur Aufnahme einer Referenzmasse 21 bildet. Weiter ist ein Referenzmassenträger 22 vorgesehen. Auch dieser ist gabelförmig ausgebildet und hat eine Mulde zur Aufnahme der Referenzmasse 21. Die Referenzmasse ist zum Beispiel eine Kugel oder ein Zylinder einer geeigneten Form. Die Referenzmassenaufnahme 20 und der Referenzmassenträger 22 sind so übereinander angeordnet, dass sie sich bei Projektion in die Horizontalebene nicht überschneiden. Dadurch ist es möglich, durch Auf- und Abbewegen des Referenzmassenträgers 22, die auf ihm aufliegende Referenzmasse 21 auf die Referenzmassenaufnahme 20 zu überführen (Bewegung von oben nach unten) bzw. die Referenzmasse 21 wieder von der Referenzmassenaufnahme 20 abzuheben. In der oberen Stellung des Referenzmassenträgers 22 ist die Referenzmasse 21 durch einen gehäusefesten Anschlag 23 gegen Bewegungen fixiert. Die jeweils unteren Stellungen 21' der Referenzmasse bzw. 22' des Referenzmassenträgers sind in der Figur strichliert angedeutet. Zum Bewegen des Referenzmassenträgers 22 dient eine über einen Getriebemotor 24 angetriebene vertikal angeordnete Spindel 26. Blosser Drehantrieb der Spindel 26 vermag je nach der Drehrichtung den Referenzmassenträger 22 anzuheben bzw. abzusenken.

Die Referenzmasse 21 simuliert für die Lastzelle 10 eine auf die Lastaufnahme 1 einwirkende «Pseudomasse». Der Massenwert der Pseudomasse ist dabei um den Übersetzungsfaktor des Hebelwerkes aus den Übertragungshebels 2, 3 grösser als der Massenwert $m_r$ der Referenzmasse 21. Die Steuereinrichtung 14, bei der es sich in der Regel um einen Mikroprozessor handelt, bedient die Lastzelle 10 (Steuerung des Stromes durch die Kraftspule 11), den Getriebemotor 24 (Auflegen und Abnehmen der Referenzmasse 21 von der Referenzmassenaufnahme 20), den Referenzspeicher 17, der Gravitationsspeicher 18 und den eigentlichen Auswertrechner 16. Der von diesem an das Anzeigegerät 19 gegebene Anzeigewert A ist gegeben durch

$$A = c \times m \times g \times \frac{KE}{K2}$$

wobei
c  ein Proportionalitätsfaktor ist,
m  der Massenwert der Masse 13 auf der Lastaufnahme 1,
g  die Gravitationskonstante entsprechend dem jeweiligen Ortswert,
$m_r$  der Massenwert der Referenzmasse 21,
$g_r$  die Gravitationskonstante am Ort der Erstkalibrierung,
KE  der im Referenzspeicher 17 abgespeicherte Eichlastwert der Referenzmasse 21 am Ort der Erstkalibrierung (= $m_r \times g_E$),
K2  der in den Gravitationsspeicher 18 eingegebene Ortslastwert der Referenzmasse 21 (= $m_r \times g$).

Am Ort der Erstkalibrierung gilt
$g = g_E$,
woraus folgt
$KE/K2 = 1$.

Damit beträgt am Ort der Erstkalibrierung der Anzeigewert A, wie er vom Anzeigegerät 19 wiedergegeben wird

$$A = c \times m \times g_E.$$

Die Erstkalibrierung stellt ein Justieren der Waage am Herstellungsort dar. Neben anderen Justiervorgängen (Nullpunktabgleich, Vorlastabgleich, Seitenlastabgleich etc.) wird der Bereichsabgleich durchgeführt. Nun dient der Referenzspeicher 17 dazu, ein zum Wert $g_E$ der Gravitationskonstante am Ort der Erstkalibrierung proportionale Grösse (KE) unverlierbar zu speichern. Andererseits wird im Gravitationsspeicher 18 eine zum jeweiligen Ortswert g der Gravitationskonstante proportionale Grösse (K2) gespeichert. Beide Werte sind am Ort der Erstkalibrierung also notwendig gleich. Es kann deshalb angenommen werden, dass der Referenzspeicher 17 und der Gravitationsspeicher 18 bei der Erstkalibrierung jeweils mit dem Zahlenwert 1 geladen sind. Nun wird eine genau der zulässigen Höchstlast der Waage entsprechende Eichmasse auf die Lastaufnahme 1 aufgelegt (zum Beispiel 12 kg). Die Anzeige am Anzeigegerät 19 muss jetzt also genau 12 000 kg betragen. Dies wird dadurch erreicht, dass der Proportionalitätsfaktor c entsprechend abgeglichen wird.

Nach diesem Vorgang wird bei abgenommener Eichmasse nunmehr die Referenzmasse 21 mittels Steuereinrichtung 14 auf die Referenzaufnahme 20 aufgelegt. Die Lastzelle 10 erzeugt eine entsprechende Kompensationskraft durch einen Strom, der durch die Kraftspule 11 geschickt wird. Die Digitalisierung der Stromstärke dieses Stromes über den Analog/Digital-Wandler 15 liefet nun den Eichlastwert KE. Dieser gibt den Einfluss der Referenzmasse 21 auf die Lastzelle 10 am Ort der Erstkalibrierung wieder. Der Wert betrage beispielsweise 0,465 kg. Er wird am Anzeigegerät 19 angezeigt. Dieser Eichlastwert KE wird nun in den Referenzspeicher 17 eingespeichert. Zweckmässig wird deshalb für den Referenzspeicher ein programmierbares Read only memory (E-PROM) verwendet. Nun ist die Waage erstkalibriert. Selbstverständlich wird am Ort der Erstkalibrierung der im Referenzspeicher 17 abgespeicherte Wert auch in den Gravitationsspeicher 18 eingegeben.

Gelangt die Waage nun an einem anderen Ort, z.B. im Betrieb des Käufers der Waage zur Aufstellung, so muss zur Berücksichtigung des am Aufstellungsort gültigen Ortswertes g der Gravitationskonstante zunächst ein «Kalibrierzyklus» bzw. «Nachkalibrierzyklus» gefahren werden. Dieser wird durch die Steuereinrichtung 14 ausgelöst. Dabei geschieht folgendes:

Bei unbelasteter Lastaufnahme 1 wird zunächst die Referenzmasse 21 auf die oben bereits beschriebene Art auf der Referenzmassenaufnahme 20 abgelegt und ihre Wirkung auf die Lastzelle 10 ermittelt. Am Ausgang des Analog/Digital-Wandlers 15 liegt dann der Ortslastwert K2 ($= m_r \times g$) vor. Er betrage beispielsweise 0,460 kg. Dieser Wert wird nun in den Gravitationsspeicher 18 eingegeben, während im Referenzspeicher 17 nach wie vor der Eichlastwert KE am Ort der Erstkalibrierung abgespeichert ist. Danach wird die Waage zum Wiegen freigegeben.

Wird nun auf die Lastaufnahme 1 eine Masse 13 mit einem Massenwert m aufgelegt, so ergibt sich unter Wirkung des Ortswertes g der Gravitationskonstante auf dem Massenwert m der Masse 13 im Anzeigegerät 19 eine Anzeige

$$A = c \times m \times g \times \frac{KE}{K2} = c \times m \times g \, \frac{m_r \times g_E}{m_r \times g}.$$

Es gilt also

$$A = c \times m \times g_E.$$

Der Anzeigewert A stimmt also mit demjenigen am Ort der Erstkalibrierung (Herstellungsort) unter Einfluss der dort wirkenden Gravitationskonstante $g_E$ überein. Damit ist die Anzeige vom Einfluss des am Aufstellungsort jeweils gültigen Ortswertes g der Gravitationskonstante unabhängig. Die Waage zeigt immer den Wert an, auf den sie bei der Erstkalibrierung abgeglichen wurde.

Wird bei jedem Einschalten der Waage ein derartiger Nachkalibrierzyklus selbsttätig durchgeführt, so ist unabhängig vom jeweiligen Aufstellungsort der Waage und dem dort gegebenen Ortswert der Gravitationskonstante für eine immer gleiche Anzeige für eine gleiche Masse 13 gesorgt. Es handelt sich also um eine selbstkalibrierende Waage. Im Gegensatz zur bei der Erstkalibrierung verwendeten Eichmasse muss dabei die für die Nachkalibrierung in das Gerät eingebaute Referenzmasse 21 nicht geeicht sein. Es wurde oben gezeigt, dass der Massenwert $m_r$ der Referenzmasse im Anzeigenwert A gar nicht mehr auftritt. Es kann somit die absolute Grösse des Gewichtes der Referenzmasse 21 nach anderen Zweckmässigkeitsgründen ausgewählt sein. Insbesondere kommt es auf den absoluten Wert der Referenzmasse 21 nicht an, weshalb auch bei ihrer Herstellung keine engen Toleranzen eingehalten werden müssen. Das trägt erheblich zur Verbilligung der selbstkalibrierenden Waage bei.

Selbstverständlich muss die selbstkalibrierende Waage funktionssicher sein. Das setzt voraus, dass der Kalibrier- bzw. Nachkalibrierzyklus auch dann erfolgreich durchgeführt werden kann, wenn sich eine Masse 13 auf der Lastaufnahme 1 befindet, zusätzliche Massen aufgebracht bzw. abgenommen werden. Falschkalibrierungen müssen auch in diesem Fall ausgeschlossen werden. Die Steuereinrichtung 14 ist deshalb so ausgelegt, dass der Kalibriervorgang wie folgt abläuft:

Sofort nach Einschalten der Waage wird der Nullwert (Gewichtswert bei abgehobener Referenzmasse 21) ermittelt. Liegt dabei eine Masse 13 mit einem Massenwert $m_1$ auf der Lastaufnahme 1, so ergibt sich ein Anzeigewert $A_1$:

$$A_1 = c \times m_1 \times g \times \frac{KE}{K2} \, (\text{z.B. } 2{,}067 \text{ kg}).$$

Dieser Wert A 1 wird im Auswertrechner 16 gespeichert. Danach besorgt die Steuereinrichtung 14 das Auflegen der Referenzmasse 21 auf die Referenzaufnahme 20. Der Anzeigewert ist nun

$$A_2 = c \times (m_1 + \ddot{u} \times m_r) \times g \times \frac{KE}{K2} \, (\text{z.B. } 2{,}527)$$

wobei ü die Wirkung der Übersetzung des Hebelwerkes aus den Übertragungshebeln 2, 3 berücksichtigt, die die Referenzmasse 21 in die «Pseudomasse» umsetzt, die auf die Lastzelle 10 einwirkt. Auch dieser Wert A 2 wird im Auswertrechner 16 gespeichert.

Nun bewirkt die Steuereinrichtung 14 wieder die Abnahme der Referenzmasse 21 von der Referenzmassenaufnahme 20. Die Anzeige ist nun

$$A_3 = c \times m_1 \times g \times \frac{KE}{K2} = A_1 \, (\text{z.B. } 2{,}067 \text{ kg}).$$

Der Auswertrechner 16 (oder je nach Auslegung auch der Mikroprozessor in der Steuereinrichtung 14) ermittelt nun die Wirkung der Referenzmasse 21 aus der Differenz der Anzeigewerte $A_1$, $A_2$ und $A_3$, also aus

$$A_2 - A_1$$
bzw.
$$A_2 - A_3$$
(im Beispiel $2{,}527 - 2{,}067 = 0{,}460$ kg).

Das Vorhandensein einer Masse 13 mit dem Massenwert $m_1$ auf der Lastaufnahme 1 während des Kalibrierzyklus hat keinen Einfluss, weil durch die Differenzwertbildung die Masse $m_1$ aus der Bestimmung der Wirkung der Referenzmasse 21 herausgenommen wird.

Selbstverständlich ist es auch denkbar, dass sich der Massenwert der auf der Lastaufnahme 1 während des Kalibrierzyklus aufgelegten Masse 13 durch absichtliches Abnehmen oder Zulegen von Masse ändert. In diesem Fall stimmt der Anzeigewert $A_3$ mit dem Anzeigewert $A_1$ vor Einleitung der Nachkalibrierung nicht überein. Es genügt also, durch den Rechner vor Freigabe der Waage die Anzeigewerte $A_1$ und $A_3$ auf Gleichheit überprüfen zu lassen und die Waage nur bei Übereinstimmung beider Werte in vorgegebenen Grenzen freizugeben, sonst aber den Kalibrierzyklus zu wiederholen.

Selbstverständlich ist es möglich, die selbstkalibrierende Waage so auszugestalten, dass der Rechner weitere Plausibilitätsprüfungen vornimmt. So ist es einfach möglich und zweckmässig, die Abweichung des Ortswertes g der Gravititionskonstante am Einsatzort (möglicher Aufstellungsort) vom Wert der Gravitationskonstante am Ort der Erstkalibrierung abzuschätzen und entsprechende Grenzwerte für die zulässige Maximalabweichung des Ortswertes von der Gravitationskonstante am Ort der Erstkalibrierung als Kontrollgrössen abzuspeichern. Beispielsweise kann sich der Ortswert g der Gravitationskonstante in Abhängigkeit von der geografischen Lage und der absoluten Höhe der Aufstellungsorte gegenüber der Gravitationskonstante $g_E$ am Ort der Erstkalibrierung in einem Bereich von −0,4‰ bis +0,6‰ ändern. Sind diese Grenzwerte bekannt, dann kann der Rechner der Steuereinrichtung 14 die Wirkung der Referenzmasse 21 dadurch auf Plausibilität überprüfen, ob der ermittelte Ortslastwert K2 vom Eichlastwert KE, wie er im Referenzspeicher 17 abgespeichert ist, nur um einen Wert abweicht, der innerhalb dieser Grenzwerte liegt. Diese betragen bei den angegebenen Promillewerten beispielsweise als Massenwerte 0,463 kg und 0,458 kg. Nur wenn der Ortslastwert K2 der Referenzmasse 21 innerhalb dieser zulässigen Werte bleibt, wird die Waage freigegeben.

Durch diese Absicherungen wird zugleich auch Falschbedienungen bzw. Manipulationen entgegengewirkt. Die selbsttätige Durchführung eines Kalibrierzyklus bei jedem Einschalten der Waage, das wiederholte Starten eines Kalibrierzyklus (z.B. fünf Mal) mit nachgeschalteter Plausibilitätsprüfung auf Übereinstimmung der Ergebnisse der fünf Prüfungen, die Wiederholung in ungleichmässigen Zeiträumen auch während des Betriebs, sind weitere Möglichkeiten Manipulationen auszuschliessen. Erzeugt die Steuerung des elektromechanischen Antriebs für das Auflegen bzw. Abheben der Referenzmasse 21 ein von der Bedienungsperson nicht zu überhörendes Geräusch, so kann durch Einbau eines Geräuscherzeugers in die Waage sichergestellt werden, dass es der Bedienungsperson verborgen bleibt, wann kalibriert bzw. nachkalibriert wird.

Eine zusätzliche Möglichkeit, sich gegen Manipulationen abzusichern, besteht darin, mehrere Referenzmassen 21 zu verwenden. Selbstverständlich müssen dann der Antrieb und die Steuerung entsprechend ausgelegt sein. Beispielsweise können zwei Referenzmassen 21 mit den Massenwerten $m_r1$ und $m_r2$ Verwendung finden. Die Auswertung kann je nach erfolgtem Auflegen bzw. Abnehmen der Referenzmassen wie folgt vorgenommen werden:

Bestimmung des Ortslastwertes K2 ohne aufgelegte Referenzmassen
Anzeigewert $A_0$
Bestimmung des Ortslastwertes K2 mit aufgelegter Referenzmasse 1
Anzeigewert $A_1$
Bestimmung des Ortslastwertes K2 mit aufgelegten Referenzmassen 1 + 2
Anzeigewert $A_2$

Bestimmung des Ortslastwertes K2 mit aufgelegter Referenzmasse 2
Anzeigewert $A_3$

Bestimmung des Ortslastwertes K2 nach Abnahme beider Referenzmassen
Anzeigewert $A_4$

Der Rechner wertet nun die Anzeigewerte $A_0$ bis $A_4$ auf Erfüllung der Bedingungen

$$A_0 = A_4, A_1 = A_2 - A_3, A_3 = A_2 - A_1$$

aus. Weiter können auch die Verhältniszahlen zur Kontrolle benützt werden, zum Beispiel

$$m_r1/m_r2 = A_1/A_2,$$

wobei dieses Verhältnis eine konstruktiv vorgegebene Konstante ist, die beispielsweise der Wert 2,5 hat.


Waage
Bezugszeichenliste
1    Lastaufnahme
2    Übertragshebel
3    Übertragungshebel
4    Gelenkpunkt
5    Gelenkpunkt
6    Gelenkpunkt
7    Gelenkpunkt
8    Koppel
9    Gelenk
10    Lastzelle
11    Kraftspule
12    Magnetfeld
13    Masse
14    Steuereinrichtung
15    Analog/Digital-Wandler
16    Auswertrechner
17    Referenzspeicher
18    Gravitationsspeicher
19    Anzeigegerät
20    Referenzmassenaufnahme
21    Referenzmasse
21′    untere Stellung der Referenzmasse
22    Referenzmassenträger
22′    untere Stellung des Referenzmassenträgers
23    Anschlag
24    Getriebemotor
25    Endpunkt
26    Spindel
A    Anzeigewert
c    Proportionalitätsfaktor
E    Ort der Erstkalibrierung
g    Ortswert der Gravitationskonstante
$g_E$    Gravitationskonstante am Ort der Erstkalibrierung
G    Gewicht
KE    Eichlastwert
K2    Ortslastwert
m    Massewert der Masse 13
$m_r$    Massewert der Referenzmasse 21

## Patentansprüche

1. Waage zum Bestimmen einer Masse, deren sich unter Einfluss der Erdbeschleunigung ergebender Gewichtswert durch ein lastaufnehmendes Messsystem bestimmt wird, wobei die Waage mit einer Kalibriereinrichtung versehen ist, die mit einer Referenzmasse eine Nachkalibrierung auf den Ortswert der Erdbeschleunigung ermöglicht, und wobei der Quotient des Sollwertes und des Istwertes des Gewichtes der Referenzmasse als Nachkalibrier-Korrekturgrösse in den Auswertrechner der Waage eingespeist wird, dadurch gekennzeichnet, dass der Auswertrechner (16) der Waage das Ergebnis des Nachkalibrierzyklus einer Plausibilitätsprüfung unterzieht und die Waage nur bei positivem Ergebnis der Plausibilitätsprüfung für Wägungen freigibt.

2. Waage nach Anspruch 1, dadurch gekennzeichnet, dass in die Plausibilitätsprüfung Grenzwerte (z.B. +0,6‰ und −0,4‰) für die zulässige Maximalabweichung des Ortswertes (g) der Erdbeschleunigung von deren Grösse ($g_E$) bei der Erstkalibrierung vorgegeben sind.

3. Waage nach Anspruch 1 oder 2, dadurch gekennzeichnet, dass der Nachkalibrierzyklus wiederholt gestartet und in der Plausibilitätsprüfung die Ergebnisse der durchgeführten Nachkalibrierzyklen auf Gleichheit überprüft werden.

4. Waage nach Anspruch 1, 2 oder 3, dadurch gekennzeichnet, dass Nachkalibrierzyklus und Plausibilitätsprüfung bei jedem Einschalten der Waage selbsttätig durchgeführt werden.

5. Waage nach einem der Ansprüche 1 bis 4, dadurch gekennzeichnet, dass Nachkalibrierzyklus und Plausibilitätsprüfung während des Wägebetriebes in Zeitabständen selbsttätig wiederholt werden.

6. Waage nach Anspruch 5, dadurch gekennzeichnet, dass ein in die Waage eingebauter Geräuscherzeuger die Antriebsgeräusche für den Nachkalibrierzyklus akustisch überdeckt.

7. Waage nach einem der Ansprüche 1 bis 6, dadurch gekennzeichnet, dass für die Plausibilitätsprüfung die Ergebnisse mehrerer Nachkalibrierzyklen mit mehreren, je unterschiedlichen Referenzmassen (21) verglichen werden.

8. Waage nach einem der Ansprüche 1 bis 7, dadurch gekennzeichnet, dass für die Plausibilitätsprüfung bei einem Nachkalibrierzyklus mit auf der Lastaufnahme (1) der Waage aufliegender Masse (13) durch Differenzwertbildung zwischen einem sich mit und ohne Referenzmasse (21) ergebenden Wert die Wirkung der Referenzmasse für die Nachkalibrierung isoliert wird.

## Claims

1. Balance to determine a mass, whose weight value following under the influence of acceleration due to gravity is determined by a weight-carrying measuring system, in which case the balance is provided with a calibrating device, which, with a reference weight, makes possible a recalibration to the local value of the acceleration due to gravity and, in which case the quotient of the set value and of the actual value of the weight of the reference mass is input as a recalibrating correction quantity into the evaluation calculator of the balance, characterised in that, the evaluation calculator (16) of the balance subjects the result of the recalibrating cycle to a plausibility test and only releases the balance for weighings with a positive result of the plausibility test.

2. Balance according to claim 1, characterised in that, in the plausibility test limit values (eg +0.6‰ and −0.4‰) are given for the allowable maximum deviation of the local value (g) of the acceleration due to gravity of its quantities (gE) with the first calibration.

3. Balance according to claim 1 or 2, characterised in that, the recalibrating cycle is started repeatedly and in the plausibility test the results of the carried out recalibrating cycles are tested for uniformity.

4. Balance according to claim 1, 2 or 3, characterised in that, the recalibrating cycle and plausibility test are carried out automatically each time the balance is switched on.

5. Balance according to one of claims 1 to 4, characterised in that, the recalibrating cycle and plausibility test are repeated automatically during the weighing operation at time intervals.

6. Balance according to claim 5, characterised in that, a noise producer built-in into the balance acoustically masks the driving noises for the recalibrating cycle.

7. Balance according to one of claims 1 to 6, characterised in that, for the plausibility test the results of several recalibrating cycles are compared with several reference masses (21), each different.

8. Balance according to one of claims 1 to 7, characterised in that, for the plausibility test with a recalibrating cycle with a mass (13) supported on the weight-carrier (1) of the balance, through difference value formation between a value following with and without reference mass (21), the effect of the reference mass for the recalibrating is isolated.

## Revendications

1. Balance pour déterminer une masse dont la valeur de poids résultant de l'influence de l'accélération de la pesanteur est déterminée par un système de mesure supportant la charge, la balance étant pourvue d'un dispositif de calibrage qui, au moyen d'une masse de référence, permet de recalibrer sur la valeur locale de l'accélération de la pesanteur, et le quotient de la valeur de consigne et de la valeur réelle du poids de la masse de référence étant introduit comme grandeur de correction de recalibrage dans la calculatrice d'exploitation de la balance, caractérisée en ce que la calculatrice d'exploitation (16) de la balance soumet le résultat du cycle de recalibrage à un contrôle de plausibilité et ne libère la balance pour des pesées que si le résultat du contrôle de plausibilité est positif.

2. Balance selon la revendication 1, caractérisée en ce que, dans le contrôle de plausibilité, sont prédonnées des valeurs limites (par exemple +0,6‰ et −0,4‰) pour l'écart maximum admissible entre la valeur locale (g) de l'accélération de la pesanteur et la valeur ($g_E$) de cette accélération lors du premier calibrage.

3. Balance selon la revendication 1 ou 2, caractérisée en ce que le cycle de recalibrage est renouvelé plusieurs fois et que, dans le contrôle de plausibilité, il est vérifié qu'il y a identité entre les résultats des cycles de recalibrage effectués.

4. Balance selon une quelconque des revendications 1, 2 ou 3, caractérisée en ce que le cycle de recalibrage et le contrôle de plausibilité sont effectués automatiquement à chaque mise en marche de la balance.

5. Balance selon une quelconque des revendications 1 à 4, caractérisée en ce que le cycle de recalibrage et le contrôle de plausibilité sont répétés automatiquement à des intervalles de temps déterminés pendant l'opération de pesée.

6. Balance selon la revendication 5, caractérisée en ce qu'un générateur de bruit monté dans la balance couvre acoustiquement les bruits de moteur pour le cycle de recalibrage.

7. Balance selon une quelconque des revendications 1 à 6, caractérisée en ce que, pour le contrôle de plausibilité, on compare les résultats de plusieurs cycles de recalibrage avec plusieurs masses de référence différentes.

8. Balance selon une quelconque des revendications 1 à 7, caractérisée en ce que, pour le contrôle de plausibilité effectué lors d'un cycle de recalibrage avec la masse (13) reposant sur le plateau de balance (1), l'effet de la masse de référence pour le recalibrage est isolé par formation de la valeur de différence entre les valeurs respectivement obtenues avec et sans masse de référence (21).